# EUROPÄISCHE PATENTSCHRIFT

(11) **EP 2 404 964 B1**
(45) Veröffentlichungstag und Bekanntmachung des Hinweises auf die Patenterteilung: **11.09.2013**
(21) Anmeldenummer: 10168647.5
(22) Anmeldetag: 07.07.2010
(51) Int. Cl.: C08L 7/00, C08L 9/00, C08K 3/36

(54) **Kautschukmischung**
Rubber compound
Mélange de caoutchouc

(43) Veröffentlichungstag der Anmeldung: 11.01.2012
(73) Patentinhaber: Continental Reifen Deutschland GmbH, 30165 Hannover (DE)
(72) Erfinder: Weber, Christian, 30826, Garbsen (DE)
(74) Vertreter: Finger, Karsten

(56) Entgegenhaltungen:
- EP-A1- 1 526 002
- EP-A1- 1 529 803
- EP-A1- 2 090 613
- EP-A2- 1 876 203
- EP-A2- 2 113 531

## Beschreibung

Die Erfindung betrifft eine Kautschukmischung, insbesondere für Fahrzeugluftreifen, Gurte, Riemen und Schläuche.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.

Zur Verbesserung der Fahreigenschaften wird beispielsweise der Laufstreifen eines Fahrzeugluftreifens oft in zwei Teile geteilt, nämlich zum Einen in das Laufstreifenoberteil, welches im direkten Kontakt zur Fahrbahn steht und als Cap bezeichnet wird und zum Anderen in das darunter liegende Laufstreifenunterteil, welches auch als Base bezeichnet wird.

Die Base hat dabei mehrere Aufgaben zu erfüllen. Durch den Einsatz einer Base soll der Rollwiderstand des Reifens reduziert werden, so dass die eingesetzte Mischung eine geringe Hysterese besitzen muss. Gleichzeitig muss die Kautschukmischung der Base eine ausreichend hohe Klebrigkeit während des Reifenherstellungsprozesses aufweisen, damit der Laufstreifen am Reifenunterbau haften bleibt. In vielen Kautschukmischungen für die Cap wird aus verschiedenen Gründen eine relativ hohe Menge an Kieselsäure eingesetzt, was wiederum dazu führt, dass das Laufstreifenoberteil keine oder nur eine sehr geringe elektrische Leitfähigkeit besitzt. Hierbei muss die elektrische Leitfähigkeit des Laufstreifens durch die Verwendung eines "Carbon Center Beams" , d.h. ein die Cap durchdringender leitfähiger Pfad aus einer elektrisch leitfähigen, rußhaltigen Gummimischung, gewährleistet werden, was einen zusätzlichen Herstellungsaufwand bedeutet. Darüber hinaus ist häufig eine hohe Steifigkeit gefordert, um die HandlingEigenschaften zu verbessern. Neben all diesen Anforderungen muss ebenso die strukturelle Haltbarkeit gewährleistet sein.

Es ist bekannt, dass die oben genannten Anforderungen, wie geringe Hysterese, ausreichende Klebrigkeit, elektrische Leitfähigkeit, hohe Steifigkeit und strukturelle Haltbarkeit, in einem Konflikt zueinander stehen und meist ein nur unbefriedigender Kompromiss gefunden werden kann, d.h. verbessert sich die eine Anforderung, so verschlechtert sich mindestens eine weitere Anforderung. So verlangt beispielsweise die Anforderung "geringe Hysterese" eine Kautschukmischung mit geringem Füll- und hohem Vernetzungsgrad, was allerdings zu einer schlechten elektrischen Leitfähigkeit und einer geringen strukturellen Haltbarkeit führt.

Ebenso besteht ein Zielkonflikt zwischen der Rissbeständigkeit (strukturelle Haltbarkeit), der Steifigkeit (Handling) und der Hysterese (Rollwiderstand).

Derartige Anforderungen sind auch bei technischen Gummiartikeln, wie Gurte und Riemen, zu finden.

Aus der EP 1 589 068 A1 (D1) sind Kautschukmischungen für die Laufstreifenbase bekannt, welche eine Kombination von 5 bis 50 phr Butadienkautschuk und 50 bis 95 phr Polyisopren als Kautschukkomponente enthalten. Die Kautschukmischung enthält als einzige Füllstoffkomponente einen Aktivruß, vorzugsweise in Mengen von 55 bis 75 phr. Die Kautschukmischung hat eine hohe Flexibilität bei gleichzeitig hoher Steifigkeit, um dadurch die Handlingeigenschaften zu verbessern.

Zur Verbesserung des Chipping- und Chunking-Verhaltens eines Laufstreifens eines Fahrzeugluftreifens enthält die in EP 1 808 456 A1 (D2) beschriebene Kautschukmischung 5 bis 80 phr eines Mineralölweichmachers und 5 bis 30 phr eines Harzes mit einem bestimmten Molekulargewicht und Erweichungspunkt, ebenso noch 5 bis 100 phr eines bestimmten Rußes. Eine Kautschukkomponente, welche in hohen Mengen verwendet wird, ist hierbei Styrolbutadienkautschuk.

In WO 2009/115383 A1 (D3) wird eine Kautschukmischung, insbesondere für die Base eines Laufstreifens beschrieben, welche sich durch verbesserten Wärmeaufbau und verbessertes Abriebsverhalten auszeichnet. Die dort beschriebenen Kautschukmischungen enthalten lediglich 20 bis 40 phr eines Rußes.

EP-A-2 090 613 beschreibt Dienkautschukmischungen zur Herstellung von Reifen, Gurten und Riemen. Die Mischungen werden bevorzugt zur Herstellung eines Laufstreifens, der einen Cap/Base-Aufbau haben kann, benutzt.

EP-A-1 876 203 und EP-A-1 529 803 beschreiben Dienkautschukmischungen zur Herstellung von Reifenkomponenten,

EP-A-1 526 002 beschreibt Fahrzeugluftreifen mit einem Laufstreifen mit Cap- und Base-Aufbau. Für gute Herstellbarkeit, gute Haltbarkeit und gutes Handling enthält die Kautschukmischung für die Laufstreifenbase zumindest einen Dienkautschuk, einen Füllstoff, ein aromatisches Kohlenwasserstoffharz, eine Fettsäure und/oder ein Metallsalz einer Fettsäure und/oder ein Fettsäurederivat.

EP-A-2 113 531 beschreibt Kautschukmischungen für Fahrzeugluftreifen, Riemen und Gurte, die 0,1 - 50 phr eines natürlichen oder synthetischen Polyisoprens, A) 0,1 - 40 phr zumindest eines Butadienkautschuks und 10 - 99,8 phr eines modifizierten Styrol-Butadienkautschnks oder B) 10 - 99,8 phr eines Butadienkautschuks und 0,1 - 40 phr eines modifizierten Styrol-Butadienkautschuks, 1 - 300 phr einer amorphen Kieselsäure, 0-120 phr eines Rußes und 2 - 200 phr weitere Zusatzstoffe enthalten.

Der Erfindung liegt daher die Aufgabe zu Grunde, eine Kautschukmischung, insbesondere für Fahrzeugluftreifen mit Cap/Base-Aufbau des Laufstreifens, bereitzustellen, die den Zielkonflikt zwischen geringerer Hysterese und höherer Steifigkeit unter Beibehaltung der Rissbeständigkeit auf einem höheren Niveau lösen kann und dadurch den Einsatz von Kautschukmischungen mit niedrigerer Hysterese, insbesondere für die Base eines Fahrzeugluftreifens, ermöglicht ohne dass der Herstellprozess des Reifens oder die weiteren Reifeneigenschaften negativ beeinflusst werden.

Gelöst wird diese Aufgabe durch eine Kautschukmischung mit folgender Zusammensetzung:
- 60 bis 85 phr zumindest eines natürlichen oder synthetischen Polyisoprens und
- 15 bis 40 phr zumindest eines Butadienkautschuks und / oder zumindest eines Styrolbutadienkautschuks, wobei der Styrolbutadienkautschuk lösungspolymerisiert ist und eine Glasübergangstemperatur kleiner oder gleich -55°C besitzt, und
- 5 bis 15 phr zumindest eines Weichmacheröls und
- 15 bis 75 phr zumindest einer Kieselsäure und
- 2 bis 10 phr zumindest eines Klebharzes und
- weitere Zusatzstoffe.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise wurde gefunden, dass durch die Kombination von 60 bis 85 phr eines natürlichen und / oder synthetischen Polyisoprens und von 15 bis 40 phr eines Butadienkautschuks und / oder eines Styrolbutadienkautschuks, wobei der Styrolbutadienkautschuk lösungspolymerisiert ist und eine Glasübergangstemperatur kleiner oder gleich -55°C besitzt, und von 15 bis 75 phr einer Kieselsäure, Kautschukmischungen mit niedrigerer Hysterese, insbesondere für die Base eines Fahrzeugluftreifens ermöglicht werden, ohne dass der Herstellprozess des Reifens oder die weiteren Reifeneigenschaften negativ beeinflusst werden. Dies gilt nicht nur für den Fahrzeuglaufstreifen, insbesondere für die Base, sondern auch für weitere innere Reifenbauteile. Die Kautschukmischungen für die weiteren inneren Reifenbauteile werden im Folgenden zusammengefasst, und wie in der Reifentechnologie üblich, auch als body compounds oder body-Mischungen bezeichnet.
Der Begriff Body-Mischung beinhaltet im Wesentlichen Seitenwand, Innenseele, Apex, Gürtel, Schulter, Gürtelprofil, Squeege, Karkasse, Wulstverstärker, weitere Verstärkungseinlagen und / oder Bandage.

Weitere Anwendung findet die erfindungsgemäße Kautschukmischung in der Mischungsentwicklung für Riemen, Gurte und Schläuchen, da auch hier Anforderungen hinsichtlich geringer Hysterese, ausreichender Klebrigkeit, elektrischer Leitfähigkeit und struktureller Haltbarkeit gestellt werden.

Die Kautschukmischung enthält 60 bis 85 phr, bevorzugt 65 bis 80 phr, zumindest eines natürlichen oder synthetischen Polyisoprens und 15 bis 40 phr, bevorzugt 10 bis 35 phr, zumindest eines Butadienkautschuks und / oder zumindest eines Styrolbutadienkautschuks, wobei der Styrolbutadienkautschuk lösungspolymerisiert ist und eine Glasübergangstemperatur T_{g} kleiner oder gleich -55°C besitzt
Der Styrolbutadienkautschuk ist mit Hydroxylgruppen und / oder Epoxygruppen und / oder Siloxangruppen und / oder Aminogruppen und / oder Aminosiloxan und / oder Carboxylgruppen und / oder Phtalocyaningruppen funktionalisiert sein. Es kommen aber auch weitere, der fachkundigen Person bekannte, Funktionalisierungen, auch als Modifizierung bezeichnet, in Frage.

Weiterhin kann die Kautschukmischung 0 bis 5 phr, bevorzugt 0 bis 2 phr, eines weiteren polaren oder unpolaren Kautschuks enthalten.
Der polare oder unpolare Kautschuk ist dabei ausgewählt aus der Gruppe, bestehend aus emulsionspolymerisierter Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer.
Insbesondere Styrol-Isopren-Butadien-Terpolymer, Butylkautschuk, Halobutylkautschuk oder Ethylen-Propylen-Dien-Kautschuk kommen bei der Herstellung von technischen Gummiartikeln zum Einsatz.

Die erfindungsgemäße Kautschukmischung enthält 15 bis 75 phr, bevorzugt 20 bis 60 phr, besonders bevorzugt 20 bis 50 phr, Kieselsäure. Die gesamte Menge an Kieselsäure ist hierbei in einer besonders vorteilhaften Ausführungsform durch ein Kupplungsagens, bevorzugt Silan, an die Polymermatrix angebunden.
Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.
Erfindungsgemäß werden Kieselsäuren mit einer Stickstoff-Oberfläche zwischen 120 und 300 m²/g, bevorzugt zwischen 150 und 250 m²/g, und einer CTAB-Oberfläche zwischen 120 und 230 m²/g, bevorzugt zwischen 140 und 200 m²/g, eingesetzt.

Die Menge des vorteilhafterweise verwendeten Silans beträgt 0,5 bis 10 phr, bevorzugt 1,0 bis 6 phr, besonders bevorzugt 1,5 bis 4 phr. Als Silan-Kupplungsagenzien können dabei alle dem Fachmann für die Verwendung in Kautschukmischungen bekannten Silan-Kupplungsagenzien verwendet werden. Es ist aber auch möglich, dass die Kieselsäure nicht angebunden wird, d.h. dass kein Kupplungsagens verwendet wird.

Insbesondere für die Verwendung der erfindungsgemäßen Kautschukmischung als Base des Laufstreifens eines Reifens ist eine ausreichende Klebrigkeit der unvulkanisierten Mischung unbedingt notwendig, damit der Laufstreifen während des Herstellprozesses haften bleibt. Dazu müssen in der Kautschukmischung wenigstens 2 bis 10 phr eines Klebharzes vorhanden sein. Als Klebharze können natürliche oder synthetische Harze, wie Kohlenwasserstoffharze, eingesetzt werden, die als Klebrigmacher wirken. Die Kohlenwasserstoffharze können phenolisch, aromatisch oder aliphatisch sein. Bevorzugt sind die Klebharze ausgewählt aus der Gruppe, bestehend aus Kolophoniumharzen und deren Estern, Terpen-Phenol-Harzen, Alkin-Phenol-Harzen, Phenol-Harzen und Cumaron-Inden-Harzen, wobei Phenol-Harze für die vorliegende Erfindung besonders gut geeignet sind.

Die erfindungsgemäße Kautschukmischung enthält weiterhin 5 bis 15 phr, bevorzugt 5 bis 10 phr, zumindest eines Weichmacheröls, wobei das Weichmacheröl bevorzugt ein Mineralöl ist, das ausgewählt ist aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle. Es ist vorteilhaft er Kautschukmischung für die Base eines Laufstreifens ein Weichmacheröl hinzuzufügen, da im fertigen Reifen Weichmacher generell entsprechend dem Konzentrationsgefälle migrieren und die Migration durch die genannte Maßnahme begrenzt werden kann. Es hat sich ein positiver Einfluss auf das Rollwiderstandsverhalten gezeigt, wenn das Weichmacheröl einen relativ niedrige Glasühergangstemperatur (T_{g}) hat. Daher ist die Verwendung von MES überaus bevorzugt, die von TDAE sehr bevorzugt und die von RAE bevorzugt.

Es können in der Kautschukmischung noch 0 bis 5 phr zumindest eines weiteren zusätzlichen Weichmachers vorhanden sein. Dieser weitere Weichmacher kann ein synthetischer Weichmacher und / oder eine Fettsäure und / oder ein Fettsäurederivat und / oder ein Harz und / oder ein Faktis und / oder ein Pflanzenöl oder ein BTL-Ö1 (Biomass-To-Liquid) sein.

In einer besonders bevorzugten Ausführungsform enthält die Kautschukmischung 20 bis 60 phr, bevorzugt 45 bis 60 phr, zumindest eines Rußes enthält. Bevorzugt ist hierbei, wenn der Ruß eine Iodzahl gemäß ASTM D 1510 zwischen 60 und 300 g / kg, bevorzugt zwischen 80 und 130 g / kg und eine DBP-Zahl gemäß ASTM D 2414 zwischen 80 und 200 cm³ /100g, bevorzugt zwischen 100 und 140 cm³ /100g, besitzt. Die Iodzahl gemäß ASTM D 1510 wird auch als Iodabsorptionszahl bezeichnet. Die DBP-Zahl gemäß ASTM D 2414 bestimmt das spezifische Absorptionsvolumen eines Rußes oder eines hellen Füllstoffes mittels Dibutylphthalat. Die Verwendung eines derartigen Rußes zeigt Vorteile hinsichtlich des Abriebverhaltens des gesamten Laufstreifens, da über den Rücklauf während des Reifenherstellprozesses geringe Mengen des Rußes der Base in die Kautschukmischung der Cap gelangen. Reifenversuche haben gezeigt, dass schon derart geringe Mengen dazu führen, dass sich bei Verwendung von Rußen mit anderen als den oben genannten Iod- und DBP-Zahlen der Abrieb deutlich verschlechtert.
Die Gesamtmenge an Füllstoffe, d.h. im Wesentlichen die Menge an Kieselsäure und Ruß zusammen, sollte zwischen 50 und 80 phr liegen, um den Füllgrad der Mischung auf einem guten Level zu halten und so die geforderten Eigenschaften nicht negativ zu beeinflussen.

Des Weiteren enthält die Kautschukmischung bevorzugt noch 0,1 bis 10 phr, besonders bevorzugt 0,2 bis 8 phr, ganz besonders bevorzugt 0,2 bis 4 phr, Zinkoxid.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.
Weiterhin enthält die Kautschukmischung noch weitere Zusatzstoffe.
Weitere Zusatzstoffe beinhaltet im Wesentlichen das Vernetzungssystem (Vernetzer, Beschleuniger und Verzögerer), Ozonschutzmittel, Alterungsschutzmittel, Mastikationshilfsmittel und weitere Aktivatoren.
Der Mengenanteil der Gesamtmenge an weiteren Zusatzstoffen beträgt 2 bis 50 phr, bevorzugt 5 bis 20 phr.

Die Vulkanisation der Kautschukmischung wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer, die erfindungsgemäß in den obig beschriebenen Zusatzstoffen enthalten sind, und Vulkanisationsaktivatoren, wie obig beschrieben, enthalten.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Fahrzeugluftreifen, insbesondere zur Herstellung der Base des Laufstreifens eines Reifens und / oder einer Body-Mischung eines Reifens und zur Herstellung von Riemen, Gurten und Schläuchen zu verwenden.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweigeteilt, so findet die Kautschukmischung bevorzugt Anwendung als Mischung für die Base.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungcn dienen dann dem Aufbau eines Reifenrohlings.
Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung. Hierbei ist beispielsweise ebenso eine ausreichende Klebrigkeit relevant, damit sich ein guter Haftverbund zwischen den einzelnen Schichten oder gegebenenfalls zwischen der Kautschukmischung und den Festigkeitsträgern bilden kann.

Die Erfindung soll nun anhand von Vergleichs- und Ausführungsbeispielen, die in Tabelle 1 zusammengefasst sind, näher erläutert werden. Erfindungsgemäße Mischungen beginnen mit "E", während die Vergleichsmischungen mit "V" gekennzeichnet sind.
Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).
Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte bei Raumtemperatur (RT) und 70°C gemäß DIN 53 505
- Rückprallelastizität bei Raumtemperatur (RT) und 70°C gemäß DIN 53 512
- Spannungswerte (Modul) bei 200 % Dehnung bei Raumtemperatur gemäß DIN 53 504
- Zugfestigkeit bei Raumtemperatur (RT) gemäß DIN 53 504
- Weiterreißwiderstand nach Graves bei Raumtemperatur (RT) gemäß DIN 53 515
- Reißenergie bei Raumtemperatur (RT) gemäß DIN 53 448
- Reißdehnung bei Raumtemperatur (RT) gemäß DIN 53 504
- dynamischer Speichermodul E' bei 55 °C gemäß DIN 53 513 bei 8% Dehnung
- Durchgangswiderstand gemäß Norm DIN IEC 93

^{a} SMR 10
^{b} High-cis Polybutadien , cis-Anteil ≥ 95 Gew. -%
^{c} SSBR, NS612 Fa. Nippon Zeon, T_{g} -65°C, OH-Gruppen modifiziert
^{d} SSBR NS210 Fa. Nippon Zeon, Tg -45°C
^{e}VN3, Fa. Evonik
^{f} TESPD
^{g} MES
^{h} Phenolharz, Koresin^{®}, Fa. BASF
ⁱAlterungsschutzmittel, Wachse, ggf. DPG
^{j}Sulfenamidbeschleuniger, CBS
ZnO, Stearinsäure und ggf. weitere Verarbeitungshilfsmittel wurden in den üblichen Mengen verwendet.

**Tabelle 1**

| **Bestandteile** | **Einh.** | **V1** | **V2** | **V3** | **V4** | **V5** | **E1** | **E2** | **E3** | **E4** | **E5** | **E6** |
|---|---|---|---|---|---|---|---|---|---|---|---|---|
| Polyisopren^{a} | phr | 100 | 40 | 70 | 70 | 70 | 80 | 70 | 60 | 70 | 70 | 70 |
| BR^{b} | phr | - | 60 | - | 30 | 30 | 20 | 30 | 40 | -- | 30 | -- |
| SSBR^{c} | phr | -- | -- | -- | -- | -- | -- | -- | -- | 30 | -- | 30 |
| SSBR^{d} | phr | -- | -- | 30 | -- | -- | -- | -- | -- | -- | -- | -- |
| Kieselsäure^{e} | phr | 20 | 20 | 20 | -- | 10 | 20 | 20 | 20 | 20 | 50 | 50 |
| Silan^{f} | phr | 1,5 | 1,5 | 1,5 | -- | 0,75 | 1,5 | 1,5 | 1,5 | 1,5 | 3,7 | 3,7 |
| Ruß, N339 | phr | 50 | 50 | 50 | 65 | 55 | 50 | 50 | 50 | 50 | 20 | 20 |
| Weichmacheröl^{g} | phr | 5 | 5 | 5 | 5 | 5 | 5 | 5 | 5 | 5 | 7 | 7 |
| Klebharz^{h} | phr | 4 | 4 | 4 | 4 | 4 | 4 | 4 | 4 | 4 | 4 | 4 |
| W. Zusatzstoffeⁱ | phr | 7 | 7 | 7 | 7 | 7 | 7 | 7 | 7 | 7 | 7,5 | 7,5 |
| Beschleuniger^{j} | phr | 3 | 3 | 3 | 3 | 3 | 3 | 3 | 3 | 3 | 3,3 | 3,3 |
| Schwefel | phr | 2 | 2 | 2 | 2 | 2 | 2 | 2 | 2 | 2 | 2,1 | 2,1 |

| **Eigenschaft** | **Einh.** | **V1** | **V2** | **V3** | **V4** | **V5** | **E1** | **E2** | **E3** | **E4** | **E5** | **E6** |
|---|---|---|---|---|---|---|---|---|---|---|---|---|
| Härte RT | ShA | 68 | 72 | 69 | 71 | 70 | 70 | 70 | 71 | 70 | 69 | 68 |
| Härte 70°C | ShA | 63 | 67 | 64 | 66 | 65 | 66 | 66 | 66 | 65 | 65 | 65 |
| Rückprall RT | % | 44 | 49 | 41 | 45 | 46 | 46 | 46 | 47 | 47 | 48 | 48 |
| Rückprall 70°C | % | 58 | 62 | 58 | 58 | 61 | 60 | 61 | 61 | 61 | 63 | 65 |
| Modul 200% | MPa | 10 | 9,9 | 9,8 | 11,4 | 10,2 | 10,1 | 10 | 10,1 | 10,2 | 8,5 | 9,6 |
| E' 55°C, 8% | MPa | 6,1 | 6,5 | 6,6 | 7,4 | 6,6 | 6,3 | 6,5 | 6,4 | 6,5 | 5,9 | 5,9 |
| Reißfestigkeit | MPa | 22 | 19 | 21 | 19 | 20 | 21 | 21 | 20 | 22 | 21 | 21 |
| Reißdehnung | % | 420 | 350 | 390 | 320 | 370 | 410 | 390 | 380 | 400 | 480 | 480 |
| Reißenergie | MJ/m | 3,9 | 3,3 | 3,9 | 2,7 | 3.1 | 3,7 | 3,7 | 3,5 | 3,6 | 4,2 | 3,3 |
| Weiterreißwiderstand | N/mm | 70 | 52 | 69 | 57 | 67 | 69 | 65 | 61 | 65 | 67 | 55 |
| Durchgangswiderstand | Ω*cm | 3E +04 | 4E +04 | 5E +04 | 3E +02 | 2E +03 | 2E +04 | 9E +03 | 1E +04 | 2E +04 | 1E +14 | 3E +14 |

Untersuchungen haben ergeben, dass für die Kautschukmischung der Base eines Laufstreifens eines Fahrzeugluftreifens, der Wert des Rückpralls bei 70°C mit dem Rollwiderstandverhalten und die Härte bei RT mit dem Handling korreliert sind. Als Parameter für die strukturelle Haltbarkeit haben sich die Reißenergie und der Weiterreißwiderstand als physikalische Mischungsparameter zur Charakterisierung der Rissbeständigkeit bewährt. Aus der Tabelle 1 ist zu erkennen, dass eine Korrelation zwischen der Reißenergie, dem Spannungswert bei 200% Dehnung und dem Wert für den Rückprall bei RT besteht. Je höher der Wert für den Rückprall bei RT oder der Spannungswert bei 200% Dehnung, desto geringer ist der Wert für die Reißenergie. Die Aufgabe der vorliegenden Erfindung lässt sich verkürzt dahingehend zusammenfassen, dass eine Kautschukmischung mit niedrigem Modul aber hoher Härte und Rückprall gefunden werden musste.
Überraschenderweise hat sich, wie aus der Tabelle 1 zu erkennen ist, der Einsatz von BR bzw. einem obig definierten SSBR als vorteilhaft erwiesen. Dies war insofern überraschend, als das die Verwendung von BR üblicherweise die Reißeigenschaften negativ beeinflusst. Anhand der Mischung V1, welche nur Polyisopren enthält, zeigen sich erstaunlicherweise kaum Vorteile bezüglich der Reißeigenschaften, sondern sogar Nachteile im Rückprall und der Härte bei RT. Die Verwendung von BR bzw. einem obig definierten SSBR führt überraschenderweise zu einer Verschiebung dieses Konfliktes, da in den entsprechenden Mischungen Härte bei RT und Rückprall erhöht werden, ohne gleichzeitig den Modul bei 200% Dehnung anzuheben. Es hat sich gezeigt, dass ein optimaler Bereich für BR bzw. einem obig definierten SSBR zwischen 15 und 40 phr liegt. Unter diesem Bereich ist der Effekt zu klein und oberhalb wird die Rissbeständigkeit (siehe Wert für Weiterreißwiderstand) zu gering (Mischungen V1, V2 und E1 bis E3). SSBR mit niedrigem T_{g} und bevorzugt modifiziert zeigen einen dem BR ähnlichen Effekt (Mischungen V3 und E2, E4, E5, E6). Eine weitere Maßnahme diesen Zielkonflikt auf ein höheres Niveau zu heben, ist der (Teil-)Austausch von Ruß durch Kieselsäure, welche bevorzugt durch ein Kupplungsagens angebunden ist. Dieser (Teil-)Austausch bewirkt eine Absenkung des Moduls bei konstanter Härte und überraschenderweise reduzierter Hysterese (Mischungen V4 V5 und E2, E5, E6).

Um die nach der Leitlinie 110 des Wirtschaftsverbandes der deutschen Kautschukindustrie e.V. vorgeschriebene elektrische Leitfähigkeit des Reifens nicht zu unterschreiten, darf der elektrische Durchgangswiderstand, insbesondere für die Base-Mischung, nicht unterhalb von 1E+08 Ω*cm, besser 1E+05 Ω*cm, liegen. Aus Tabelle 1 ist ersichtlich, dass die Menge an Ruß daher 45 phr nicht unterschreiten sollte (Mischungen E5, E6). Andernfalls muss die geforderte elektrische Leitfähigkeit durch andere Maßnahmen bzw. Bauteile sichergestellt werden.
Zusammenfassend lässt sich anhand Tabelle 1 feststellen, dass eine erfindungsgemäße Kautschukmischung zu einer signifikant verbesserten Kautschukmischung hinsichtlich geringer Hysterese mit hoher Steifigkeit und guter Reißfestigkeit führt, wie es insbesondere für die Kautschukmischung für die Base eines zweigeteilten Laufstreifens gefordert wird.

## Patentansprüche

1. Kautschukmischung, **gekennzeichnet durch** folgende Zusammensetzung:
- 60 bis 85 phr zumindest eines natürlichen oder synthetischen Polyisoprens und
- 15 bis 40 phr zumindest eines Butadienkautschuks und / oder zumindest eines Styrolbutadienkautschuks, wobei der Styrolbutadienkautschuk lösungspolymerisiert ist und eine Glasübergangstemperatur kleiner oder gleich -55°C besitzt, und
- 5 bis 15 phr zumindest eines Weichmacheröls und
- 15 bis 75 phr zumindest einer Kieselsäure und
- 2 bis 10 phr zumindest eines Klebharzes und
- weitere Zusatzstoffe.

2. Kautschukmischung nach Anspruch 1, **dadurch gekennzeichnet, dass** das sie 70 bis 85 phr eines natürlichen oder synthetischen Polyisoprens enthält.

3. Kautschukmischung nach Anspruch 1 oder 2, **dadurch gekennzeichnet, dass** das sie 15 bis 30 phr eines Butadienkautschuks und / oder eines Styrolbutadienkautschuks, wobei der Styrolbutadienkautschuk lösungspolymerisiert ist und eine Glasübergangstemperatur kleiner oder gleich -55°C besitzt, enthält.

4. Kautschukmischung nach einem der Ansprüche 1 bis 3, **dadurch gekennzeichnet, dass** der Styrolbutadienkautschuk mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert ist.

5. Kautschukmischung nach einem der Ansprüche 1 bis 4, **dadurch gekennzeichnet, dass** das sie zusätzlich 45 bis 60 phr zumindest eines Rußes enthält.

6. Kautschukmischung nach Anspruch 5, **dadurch gekennzeichnet, dass** der Ruß eine Iod-Absorptionszahl gemäß ASTM D 1510 von 60 bis 300 g/kg und eine DPB-Zahl gemäß ASTM D 2414 von 80 bis 200 cm³/100 g hat.

7. Kautschukmischung nach Anspruch 6, **dadurch gekennzeichnet, dass** der Ruß eine Iod-Absorptionszahl gemäß ASTM D 1510 von 80 bis 130 g/kg und eine DPB-Zahl gemäß ASTM D 2414 von 100 bis 140 cm³/100 g hat.

8. Kautschukmischung nach einem der Ansprüche 1 bis 7, **dadurch gekennzeichnet, dass** die Kieselsäure durch ein Kupplungsagens aktiviert ist

9. Kautschukmischung nach einem der Ansprüche 1 bis 8, **dadurch gekennzeichnet, dass** sie 5 bis 10 phr eines Weichmacheröls enthält.

10. Kautschukmischung nach einem der Ansprüche 1 bis 9, **dadurch gekennzeichnet, dass** das Weichmacheröl ein Mineralöl ist.

11. Kautschukmischung nach einem der Ansprüche 1 bis 10, **dadurch gekennzeichnet, dass** das Klebharz ein Phenolharz ist.

12. Verwendung einer Kautschukmischung nach einem der Ansprüche 1 bis 11 zur Herstellung eines Fahrzeugluftreifens.

13. Verwendung einer Kautschukmischung nach Anspruch 12 zur Herstellung eines Laufstreifens oder einer Body-Mischung eines Fahrzeugluftreifens.

14. Verwendung einer Kautschukmischung nach einem der Ansprüche 1 bis 11 zur Herstellung eines Gurtes, Riemens oder Schlauches.

## Claims

1. Rubber mixture **characterized by** the following constitution:
- 60 to 85 phr of at least one natural or synthetic polyisoprene and
- 15 to 40 phr of at least one butadiene rubber and/or of at least one styrene-butadiene rubber, the styrene-butadiene rubber having been solution-polymerized and possessing a glass transition temperature of less than or equal to -55°C, and
- 5 to 15 phr of at least one plasticizer oil and
- 15 to 75 phr of at least one silica and
- 2 to 10 phr of at least one tackifier resin, and
- further additives.

2. Rubber mixture of Claim 1, **characterized in that** it comprises 70 to 85 phr of a natural or synthetic polyisoprene.

3. Rubber mixture of Claim 1 or 2, **characterized in that** it comprises 15 to 30 phr of a butadiene rubber and/or of a styrene-butadiene rubber, the styrene-butadiene rubber having been solution-polymerized and possessing a glass transition temperature of less than or equal to -55°C.

4. Rubber mixture of any of Claims 1 to 3, **characterized in that** the the styrene-butadiene rubber has been modified with hydroxyl groups and/or epoxy groups and/or siloxane groups and/or amino groups and/or aminosiloxane and/or carboxyl groups and/or phthalocyanine groups.

5. Rubber mixture of any of Claims 1 to 4, **characterized in that** it further comprises 45 to 60 phr of at least one carbon black.

6. Rubber mixture of Claim 5, **characterized in that** the carbon black has an iodine absorption number to ASTM D 1510 of 60 to 300 g/kg and a DBP number to ASTM D 2414 of 80 to 200 cm³/100 g.

7. Rubber mixture of Claim 6, **characterized in that** the carbon black has an iodine absorption number to ASTM D 1510 of 80 to 130 g/kg and a DBP number to ASTM D 2414 of 100 to 140 cm³/100 g.

8. Rubber mixture of any of Claims 1 to 7, **characterized in that** the silica has been activated by a coupling agent.

9. Rubber mixture of any of Claims 1 to 8, **characterized in that** it comprises 5 to 10 phr of a plasticizer oil.

10. Rubber mixture of any of Claims 1 to 9, **characterized in that** the plasticizer oil is a mineral oil.

11. Rubber mixture of any of Claims 1 to 10, **characterized in that** the tackifier resin is a phenolic resin.

12. Use of a rubber mixture of any of Claims 1 to 11 for producing a pneumatic tire.

13. Use of a rubber mixture according to Claim 12 for producing a tread or a body mixture of a pneumatic tire.

14. Use of a rubber mixture of any of Claims 1 to 11 for producing a belt, drive-belt, or hose.

## Revendications

1. Mélange pour caoutchouc, **caractérisé par** la composition suivante :
- 60 à 85 parties par cent parties d'au moins un polyisoprène naturel ou synthétique et
- 15 à 40 parties par cent parties d'au moins un caoutchouc de butadiène et/ou d'au moins un caoutchouc de styrène-butadiène, le caoutchouc de styrène-butadiène étant polymérisé en solution et présentant une température de transition vitreuse inférieure ou égale à -55°C, et
- 5 à 15 parties par cent parties d'au moins une huile plastifiante et
- 15 à 75 parties par cent parties d'au moins une silice et
- 2 à 10 parties par cent parties d'au moins une résine adhésive et
- d'autres additifs.

2. Mélange pour caoutchouc selon la revendication 1, **caractérisé en ce qu'**il contient 70 à 85 parties par cent parties d'un polyisoprène naturel ou synthétique.

3. Mélange pour caoutchouc selon la revendication 1 ou 2, **caractérisé en ce qu'**il contient 15 à 30 parties par cent parties d'un caoutchouc de butadiène et/ou d'un caoutchouc de styrène-butadiène, le caoutchouc de styrène-butadiène étant polymérisé en solution et présentant une température de transition vitreuse inférieure ou égale à -55°C.

4. Mélange pour caoutchouc selon l'une quelconque des revendications 1 à 3, **caractérisé en ce que** le caoutchouc de styrène-butadiène est modifié par des groupes hydroxyle et/ou époxy et/ou siloxane et/ou amino et/ou par aminosiloxane et/ou par des groupes carboxyle et/ou phtalocyanine.

5. Mélange pour caoutchouc selon l'une quelconque des revendications 1 à 4, **caractérisé en ce qu'**il contient en plus 45 à 60 parties par cent parties d'au moins une suie.

6. Mélange pour caoutchouc selon la revendication 5, **caractérisé en ce que** la suie présente un indice d'absorption d'iode selon la norme ASTM D 1510 de 60 à 300 g/kg et un indice de DBP (phtalate de dibutyle) selon la norme ASTM D 2414 de 80 à 200 cm³/100 g.

7. Mélange pour caoutchouc selon la revendication 6, **caractérisé en ce que** la suie présente un indice d'absorption d'iode selon la norme ASTM D 1510 de 80 à 130 g/kg et un indice de DBP (phtalate de dibutyle) selon la norme ASTM D 2414 de 100 à 140 cm³/100 g.

8. Mélange pour caoutchouc selon l'une quelconque des revendications 1 à 7, **caractérisé en ce que** la silice est activée par un agent de couplage.

9. Mélange pour caoutchouc selon l'une quelconque des revendications 1 à 8, **caractérisé en ce qu'**il contient 5 à 10 parties par cent parties d'une huile plastifiante.

10. Mélange pour caoutchouc selon l'une quelconque des revendications 1 à 9, **caractérisé en ce que** l'huile plastifiante est une huile minérale.

11. Mélange pour caoutchouc selon l'une quelconque des revendications 1 à 10, **caractérisé en ce que** la résine adhésive est une résine phénolique.

12. Utilisation d'un mélange pour caoutchouc selon l'une quelconque des revendications 1 à 11 pour la fabrication d'un pneu pour véhicule.

13. Utilisation d'un mélange pour caoutchouc selon la revendication 12 pour la fabrication d'une bande de roulement ou d'un mélange de carcasse d'un pneu pour véhicule.

14. Utilisation d'un mélange pour caoutchouc selon l'une quelconque des revendications 1 à 11 pour la fabrication d'une ceinture, d'une courroie ou d'un tuyau.
